# EUROPEAN PATENT SPECIFICATION

(11) **EP 3 528 648 B1**
(45) Date of publication and mention of the grant of the patent: **03.01.2024**
(21) Application number: 17783892.7
(22) Date of filing: 19.10.2017
(51) Int. Cl.: A23N 17/00, A23B 9/02, A23L 7/10, A23L 7/196, A23L 11/00, A23N 12/04, B01F 27/95, B01F 35/45

(54) **APPARATUS FOR COOKING SEEDS, SUCH AS CEREALS, LEGUMES OR THE LIKE**
VORRICHTUNG ZUM KOCHEN VON SAMEN WIE GETREIDE, HÜLSENFRÜCHTE ODER DERGLEICHEN
APPAREIL POUR CUISINER DES GRAINES, TELLES QUE DES CÉRÉALES DES LÉGUMINEUSES OU DES GRAINES SIMILAIRES

(30) Priority: 20.10.2016 IT 201600105406
(43) Date of publication of application: 28.08.2019
(73) Proprietor: Ferrari, Giuseppe Eugenio, 25037 Pontoglio (BS) (IT)
(72) Inventor: Ferrari, Giuseppe Eugenio, 25037 Pontoglio (BS) (IT)
(74) Representative: Modiano, Micaela Nadia
(86) International application number: PCT/EP2017/076728
(87) International publication number: WO 2018/073351

(56) References cited:
- GB-A- 1 101 821
- KR-B1- 100 763 653
- SU-A1- 900 845
- US-A- 2 668 764
- US-A- 5 123 748
- US-A- 5 649 765
- US-A1- 2009 087 531

## Description

The present invention relates to an apparatus for cooking seeds, such as cereals, or legumes, as defined in the appended claims.

The cooking of seeds is a treatment that is typically carried out at a temperature of 95-110°C with humidity comprised between 20% and 80%.

The cooking of starchy seeds (maize, rice, barley, spelt, rye, oats, sorghum, quinoa, wheat, millet, and in particular the so-called "flaking" (carried out to convert non-soluble starch (glucose polymer) to soluble glucose) is a treatment for animal feeds or for foods for human consumption (flakes, instant polenta, maize pasta and rice (spaghetti, macaroni etc.). ).

The humidity of starchy seeds with flakes is approximately 20-30%. Cooked starchy seeds with a humidity of 20-30% are converted 50% to glucose; to convert 100% to glucose it is necessary to subject the seeds to the rolling process.

Conventional flaking systems are usually constituted by a tank for storing the raw material (which may be clean and, in some cases, hulled or degermed).

Downstream of the storage tank a conditioning device is provided that can be hydrothermal (using water and heat) or thermal (using heat only).

Finally, downstream of the conditioning device a rolling device is provided, for example using rollers, as well as a cooling device, typically with horizontal belts.

US 2009/0087531 relates to a cooking and hydration apparatus to process corn and other grains prior to a flaking operation, by using a paddle and mixer assembly to accelerate, increase, and optimise each of the cooking, moisture pickup, and heat infusion process steps. The apparatus comprises a cooking vessel having an elongated horizontal shape with a rounded interior bottom portion, wherein grain is submerged in water. A plurality of steam injection nozzles inject steam directly into the water, while a plurality of elongate mixing blades extend longitudinally in the cooking vessel.

The aim of the present invention is to make available a new apparatus for cooking cereals which is capable of optimizing the various steps of the process.

Within this aim, an important object of the present invention is to make available an apparatus for cooking cereals which is extremely practical to use.

This aim and these and other objects which will become better apparent hereinafter are achieved by a cooking apparatus according to claim 1.

Further characteristics and advantages of the invention will become better apparent from the description of some preferred but not exclusive embodiments of an apparatus, which are illustrated by way of example in the accompanying drawings wherein:

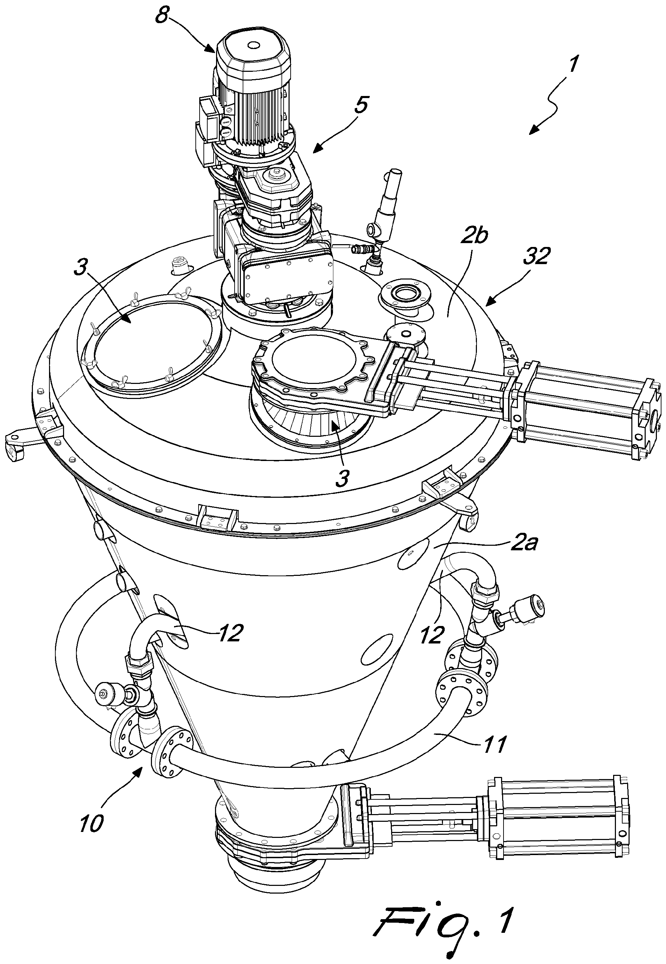

Figure 1 is a perspective view of a cooking reactor;

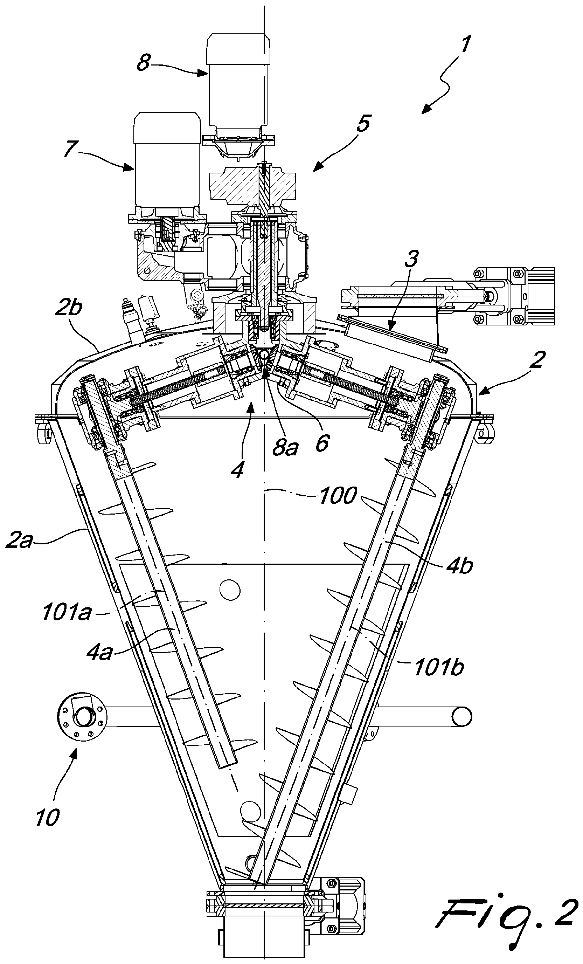

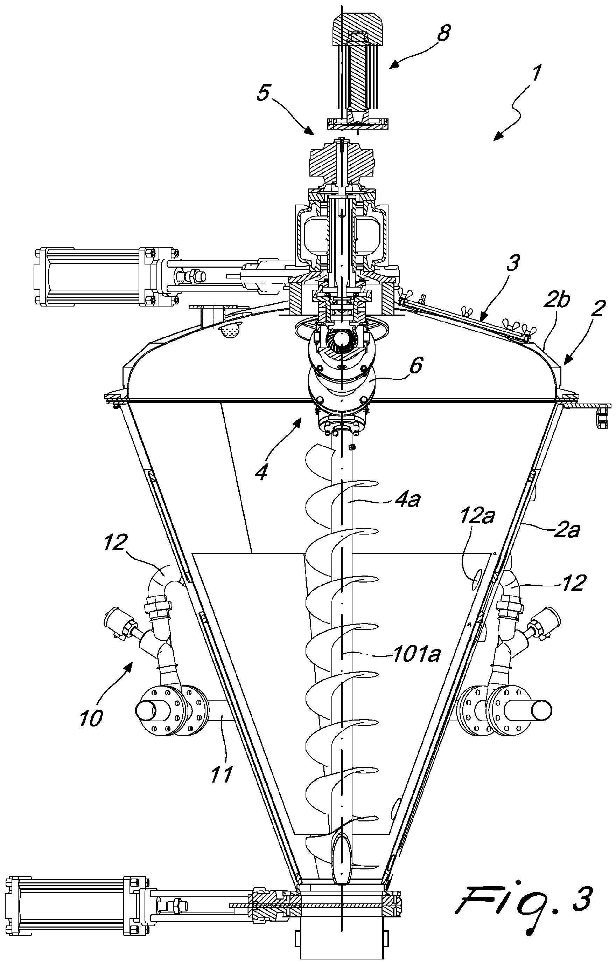

Figures 2 and 3 are two longitudinal cross-sections of the cooking reactor.

With reference to the figures, the present invention relates to an apparatus, generally designated by the reference numeral 1, for cooking seeds such as cereals, or legumes, as defined in the appended claims. The apparatus is adapted for the so-called "flaking".

The apparatus 1 comprises a supporting frame for at least one cooking reactor 2 with a vertical axis 100.

The reactor 2 has a conical or frustum-shaped lower accommodation portion 2a and a pressure-tight upper closure portion 2b.

At the upper closure portion 2b there is at least one loading inlet 3, which is or are connected or can be connected functionally to a supply tank (not shown) containing a mixture of water and seeds or of seeds.

There is no reason why the water and the cereals cannot be fed separately into the cooking reactor 2.

In the supply tank further elements, in addition to the water and cereals, such as for example a syrup, can be added.

The reactor 2 accommodates a mixing device 4.

Such mixing device 4 comprising at least two mixing screws 4a, 4b, the axes of extension 101a, 101b of which converge, proceeding downward, toward the vertical axis 100 of the cooking reactor 2.

The apparatus 1 is further provided with means 5 of moving the at least two screws 4a, 4b about their own axes of extension 101a, 101b and about the vertical axis 100 of the reactor 3.

The reactor 3 is associated with a device for supplying hot water at a temperature comprised between 55°C and 100°, and preferably between 55° and 95°, and with a device 10 for introducing steam.

The steam introduction device 10 comprises an apparatus for generating heat which is a boiler (not shown) connected functionally to a delivery duct 11, which in turn is connected to respective intake ducts 12 that have an inlet 12a that leads into the cooking reactor 2.

Preferably, the inlets 12a are defined at the lower accommodation portion 2a.

In particular, the inlets 12a are defined substantially at a central region along the height extension.

A first and a second plurality of inlets 12a may also be provided, such inlets being defined, at different heights, at the lower accommodation portion 2a.

The lower accommodation portion 2a defines, at the bottom, an outlet for discharging the cooked cereals, which is arranged, for example, over an intermediate storage tank for the cooked seeds.

In the latter case, the intermediate storage tank is provided, in an upward region, with an inlet and, in a downward region, with a measured outlet for sending the cereals to a device for crushing and drying or for drying.

According to a possible embodiment, the apparatus 1 comprises, between the intermediate storage tank and the drying device, a device for rolling the cereals discharged through the measured outlet.

Conveniently, the mixing device 4 comprise a supporting body 6 for the at least two mixing screws 4a, 4b, such supporting body being able to rotate on command about the vertical axis 100.

The at least two mixing screws 4a, 4b are in turn supported by the supporting body 6 so that they can rotate about their own axes of extension 101a, 101b.

The movement means 5 comprise first motor means 7 for moving the supporting body 6 about the vertical axis 100 and second motor means 8 connected kinematically by way of at least one transmission coupling 8a to the at least two mixing screws 4a, 4b.

The reactor 2 is provided with safety means, such as for example at least one safety valve, adapted to keep the pressure inside the reactor 2 below a threshold value.

The steam for cooking passes through the delivery duct 12 that connects the boiler to the reactor 2; once it has reached the inside of the reactor 2, the steam is pushed to a pressure of 1 bar, and condenses to cook the cereals with a pressure of 0.5 bar by raising the temperature of the cereals. The cereals will have a humidity comprised indicatively between 20% and 50%.

Use of an apparatus 1 is the following.

Seeds such as cereals and legumes, after having undergone the initial treatments of cleaning and separation from dust, are ready to be converted to quality products, as required by livestock farmers, by cereal farmers and by feedstuff producers.

Cereals and legumes for the food sector, on the other hand, undergo a treatment of cleaning, hulling and degerming.

Cereals or similar products are therefore taken from silos or from storage cells to be introduced into feed buffers.

Subsequently they are taken from here to be sent to a cooking apparatus.

The first step consists of a thermal treatment that occurs in the reactor 2, where the grains remain for a preset time (approximately 10-30 minutes) and where they are mixed by virtue of the action of the mixing means 5.

Differently from solutions that involve a cooking tower, water and steam are introduced into the reactor 2 so that they cook the cereals at a temperature of approximately 100°C.

The apparatus 1 comprises PLC means that are adapted to allow, in succession, the pre-introduction into the reactor 2 of hot water by way of the hot water supply device and, subsequently, of steam by way of the steam introduction device.

In this manner an optimal humidity and temperature are obtained.

It should be noted that the reactor 2 is conical or frustum-shaped, and not cylindrical.

The conical or frustum-shaped cross-section has been specially designed and made in order to make it possible for the product to be treated homogeneously and in order to facilitate the exit path.

A boiler is the source of production of the hot water and steam necessary for the cooking.

The steam is adjustable in terms both of quantity and of temperature in order to meet the needs of the products to be processed.

Hot humidification of the cereal serves to:
- sanitize the product (reduce its bacterial load);
- make it more malleable and therefore easier to crush;
- gelatinize the starch to facilitate its solubility with consequent improvement of the digestibility and assimilation of the product.

The production of steam from water requires, among other things, extremely low energy consumption.

The new apparatus 1 makes it possible to cook the starchy seeds (with 40-80% humidity), converting 100% of the starch to glucose without a rolling mill, therefore offering the possibility of having uncrushed, whole seeds, such as for example whole maize for salads or the breakfast wheat used in France. It is also possible to produce instant flour for polenta or maize and rice flour pasta.

The apparatus 1 can further be used to produce milk of various seeds and legumes (soya), almonds and rice (cereals). For this kind of production, the product must be between 60-80% humid; it is then ground and the milk extracted. The dross will be composed of fibers.

It is also possible to cook edible buckwheat: this seed has a solid husk inside which is starch flour (glucose polymer). When cooked with hot water and steam, the starch is converted to glucose with a humidity between 40-60%. The subsequent drying of this product crystallizes the flour and the seed becomes like rice. This product is very commonly used by Slavic peoples.

The apparatus 1 further offers many other applications for seeds.

For example, to measure the soluble glucose after cooking it is necessary to produce a flour.

Then it is necessary to mix the flour with water, respectively 25% and 75%.

This dough is subjected to a viscosity measurement. In technical jargon this measurement of viscosity is called starch gelatinization.

To reduce production costs, instead of cooking the product with the bain-marie method (using only steam in a jacket), the apparatus makes it possible to introduce hot water between 70-100°C into the reactor 2 in advance and then subsequently, after a time calculated by the PLC, introduce the steam.

In this manner an optimal humidity and temperature are obtained.

The plant chars at a temperature of 140° and cooking under 110°C is therefore necessary.

In practice the materials employed, as well as the dimensions may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for cooking (1) seeds, such as cereals, legumes, comprising a reactor (2) with a vertical axis (100) and provided with a conical or frustum-shaped lower accommodation portion (2a) and a pressure-tight upper closure portion (2b), which defines at least one loading inlet (3) which is functionally connected to a device for supplying water and/or seeds, said reactor (2) accommodating a mixing device (4) which comprises at least two mixing screws (4a, 4b) the axes of extension (101a, 101b) of which converge, proceeding downward, toward the vertical axis (100) of said reactor (2), means (5) being provided of moving said at least two screws (4a, 4b) about their own axes of extension (101a, 101b) and about the vertical axis (100) of said reactor (2), said reactor (2) being associated with a boiler device for supplying hot water at a temperature comprised between 55°C and 100°C and with a boiler device for introducing steam that comprises an apparatus for generating heat which is functionally connected to a delivery duct (11) connected to respective intake ducts (12) each one of which has an inlet (12a) which leads into said reactor (2), the apparatus (1) further comprising PLC means that are configured to introduce, in succession, the pre-introduction into said reactor (2) of said hot water at a temperature comprised between 70°C and 100°C by way of said hot water supply device and, subsequently after a time calculated by said PLC means, of said steam by way of said steam introduction device, said reactor (2) further comprising safety means configured to keep the pressure inside said reactor (2) below a threshold value.

2. The apparatus (1) according to claim 1, **characterized in that** said inlets (12a) are defined at the lower accommodation portion (2a).

3. The apparatus (1) according to one or more of the preceding claims, **characterized in that** said lower accommodation portion (2a) defines, at the bottom, an outlet for discharging into an intermediate storage tank.

4. The apparatus (1) according to claim 3, **characterized in that** it comprises, between the intermediate storage tank and a drying device, a device for rolling the discharged seeds.

5. The apparatus (1) according to one or more of the preceding claims, **characterized in that** said mixing device (4) comprises a supporting body (6) for the at least two mixing screws (4a, 4b), said supporting body being able to rotate on command about the vertical axis (100).

6. The apparatus (1) according to claim 5, **characterized in that** said at least two mixing screws (4a, 4b) are supported by said supporting body (6) so that they can rotate about their own axes of extension (101a, 101b).

7. The apparatus (1) according to one or more of the preceding claims 5-6, **characterized in that** said movement means (5) comprise first motor means (7) for moving the supporting body (6) about the vertical axis (100) and second motor means (8) connected kinematically by way of at least one transmission coupling (8a) to the at least two mixing screws (4a, 4b).

## Patentansprüche

1. Eine Vorrichtung (1) zum Kochen von Samen wie Getreide, Hülsenfrüchte; die einen Reaktor (2) mit einer vertikalen Achse (100) und ausgestattet mit einem kegelförmigen oder stumpfförmigen unteren Aufnahmeabschnitt (2a) und einem druckdichten oberen Verschlussabschnitt (2b) umfasst, der mindestens einen Beladeeinlass (3) bestimmt, welcher funktionell mit einer Vorrichtung zur Zufuhr von Wasser und/oder Samen verbunden ist; wobei der Reaktor (2) eine Mischvorrichtung (4) enthält, welche mindestens zwei Mischschnecken (4a, 4b) umfasst, deren Erstreckungsachsen (101a, 101b) nach unten hin zur vertikalen Achse (100) des Reaktors (2) zusammenlaufen; wobei Mittel (5) zum Bewegen der mindestens zwei Schnecken (4a, 4b) um ihre eigenen Erstreckungsachsen (101a, 101b) und um die vertikale Achse (100) des Reaktors (2) bereitgestellt sind; wobei der Reaktor (2) mit einer Boilervorrichtung für die Zufuhr von Heißwasser bei einer Temperatur zwischen 55°C und 100°C und mit einer Boilervorrichtung für den Einlass von Dampf verbunden ist, die eine Vorrichtung zur Erzeugung von Wärme umfasst, welche funktionell mit einer Abgabeleitung (11) verbunden ist, die mit entsprechenden Einlassleitungen (12) verbunden ist, von denen jede einen Einlass (12a) hat, der in den Reaktor (2) führt; wobei die Vorrichtung (1) weiter SPS-Mittel umfasst, die konfiguriert sind, um nacheinander Folgendes einzuführen: den Voreinlass des Heißwassers bei einer Temperatur zwischen 70°C und 100°C in den Reaktor (2) über die Heißwasser-Zuführvorrichtung und anschließend, nach einer von den SPS-Mitteln berechneten Zeit, des Dampfs über die Dampf-Einlassvorrichtung; wobei der Reaktor (2) weiter Sicherheitsmittel umfasst, die ausgebildet sind, um den Druck innerhalb des Reaktors (2) unterhalb eines Schwellenwerts zu halten.

2. Die Vorrichtung (1) gemäß Anspruch 1, **dadurch gekennzeichnet, dass** die Einlässe (12a) am unteren Aufnahmeabschnitt (2a) bestimmt sind.

3. Die Vorrichtung (1) gemäß einem oder mehreren der obigen Ansprüche, **dadurch gekennzeichnet, dass** der untere Aufnahmeabschnitt (2a) am Boden einen Auslass zum Ablassen in einen Zwischenspeicherbehälter bestimmt.

4. Die Vorrichtung (1) gemäß Anspruch 3, **dadurch gekennzeichnet, dass** sie zwischen dem Zwischenspeicherbehälter und einer Trocknungsvorrichtung eine Vorrichtung zum Rollen der abgelassenen Samen umfasst.

5. Die Vorrichtung (1) gemäß einem oder mehreren der obigen Ansprüche, **dadurch gekennzeichnet, dass** die Mischvorrichtung (4) einen tragenden Körper (6) für die mindestens zwei Mischschnecken (4a, 4b) umfasst, wobei der tragende Körper in der Lage ist, sich auf Befehl um die vertikale Achse (100) zu drehen.

6. Die Vorrichtung (1) gemäß Anspruch 5, **dadurch gekennzeichnet, dass** die mindestens zwei Mischschnecken (4a, 4b) so auf dem tragenden Körper (6) gelagert sind, dass sie sich um ihre eigenen Erstreckungsachsen (101a, 101b) drehen können.

7. Die Vorrichtung (1) gemäß einem oder mehreren der obigen Ansprüche 5-6, **dadurch gekennzeichnet, dass** die Bewegungsmittel (5) erste Motormittel (7) zum Bewegen des tragenden Körpers (6) um die vertikale Achse (100) und zweite Motormittel (8) umfassen, die kinematisch über mindestens eine Getriebekopplung (8a) mit den mindestens zwei Mischschnecken (4a, 4b) verbunden sind.

## Revendications

1. Appareil pour cuisiner (1) des graines, comme des céréales, des légumes, comprenant un réacteur (2) avec un axe vertical (100) et pourvu d'un partie formant contenant inférieure (2a) de forme conique ou tronconique et d'une partie de fermeture supérieure (2b) étanche à la pression, qui définit au moins un orifice d'entrée de chargement (3) qui est connecté de manière fonctionnelle à un dispositif d'alimentation en eau et/ou en graines, ledit réacteur (2) logeant un dispositif de mélange (4) qui comprend au moins deux vis de mélange (4a, 4b) dont les axes d'extension (101a, 101b) convergent, en direction du bas, vers l' axe vertical (100) dudit réacteur (2), des moyens (5) étant fournis pour faire se mouvoir lesdites au moins deux vis (4a, 4b) autour de leurs propres axes d'extension (101a, 101b) et autour de l' axe vertical (100) dudit réacteur (2), ledit réacteur (2) étant associé à un dispositif de chaudière pour fournir de l'eau chaude à une température comprise entre 55°C et 100°C et à un dispositif de chaudière pour introduire de la vapeur qui comprend un appareil pour générer de la chaleur qui est fonctionnellement connecté à un conduit de distribution (11) connecté à des conduits d'entrée (12) respectifs dont chacun comporte un orifice d'entrée (12a) qui mène dans ledit réacteur (2), l'appareil (1) comprenant en outre des moyens d'API qui sont configurés pour introduire, successivement, la pré-introduction dans ledit réacteur (2) de ladite eau chaude à une température comprise entre 70°C et 100°C au moyen dudit dispositif d'alimentation d'eau chaude et, ensuite après un temps calculé par lesdits moyens d'API, de ladite vapeur au moyen dudit dispositif d'introduction de vapeur, ledit réacteur (2) comprenant en outre des moyens de sécurité configurés pour garder la pression à l'intérieur dudit réacteur (2) sous une valeur de seuil.

2. Appareil (1) selon la revendication 1, **caractérisé en ce que** lesdits orifices d'entrée (12a) sont définis au niveau de la partie formant contenant inférieure (2a).

3. Appareil (1) selon une ou plusieurs des revendications précédentes, **caractérisé en ce que** ladite partie formant contenant inférieure (2a) définit, au fond, un orifice de sortie pour déchargement dans un réservoir de stockage intermédiaire.

4. Appareil (1) selon la revendication 3, **caractérisé en ce qu'**il comprend, entre le réservoir de stockage intermédiaire et un dispositif de séchage, un dispositif de roulement des graines déchargées.

5. Appareil (1) selon une ou plusieurs des revendications précédentes, **caractérisé en ce que** ledit dispositif de mélange (4) comprend un corps de support (6) pour les au moins deux vis de mélange (4a, 4b), ledit corps de support pouvant tourner sur commande autour de l'axe vertical (100).

6. Appareil (1) selon la revendication 5, **caractérisé en ce que** lesdites au moins deux vis de mélange (4a, 4b) sont supportées par ledit corps de support (6) de telle manière qu'elles peuvent tourner autour de leurs propres axes d'extension (101a, 101b).

7. Appareil (1) selon une ou plusieurs des revendications 5-6 précédentes, **caractérisé en ce que** lesdits moyens de mouvement (5) comprennent des premiers moyens de moteur (7) pour faire se mouvoir le corps de support (6) autour de l' axe vertical (100) et des seconds moyens de moteur (8) connectés cinématiquement au moyen d'au moins un couplage de transmission (8a) aux au moins deux vis de mélange (4a, 4b).
